(19) **Europäisches Patentamt / European Patent Office / Office européen des brevets**

(11) **EP 2 771 841 B1**

(12) **FASCICULE DE BREVET EUROPEEN**

(45) Date de publication et mention de la délivrance du brevet:
**16.12.2015 Bulletin 2015/51**

(21) Numéro de dépôt: **12777912.2**

(22) Date de dépôt: **23.10.2012**

(51) Int Cl.:
*G06K 9/00* *(2006.01)*

(86) Numéro de dépôt international:
**PCT/EP2012/070973**

(87) Numéro de publication internationale:
**WO 2013/060681 (02.05.2013 Gazette 2013/18)**

(54) **DISPOSITIF ANTI-FRAUDE**

BETRUGSVERHINDERNDE VORRICHTUNG

ANTI-FRAUD DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2011 FR 1159678**

(43) Date de publication de la demande:
**03.09.2014 Bulletin 2014/36**

(73) Titulaire: **Morpho**
**75015 Paris (FR)**

(72) Inventeurs:
- **PICARD, Sylvaine**
  **F-75015 Paris (FR)**
- **THIEBOT, Alain**
  **F-75015 Paris (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
FR-A1- 2 862 785   US-A1- 2004 125 994
US-A1- 2009 316 963

- A. ANTONELLI ET AL: "Fake Finger Detection by Skin Distortion Analysis", IEEE TRANSACTIONS ON INFORMATION FORENSICS AND SECURITY, vol. 1, no. 3, 1 septembre 2006 (2006-09-01), pages 360-373, XP055007996, ISSN: 1556-6013, DOI: 10.1109/TIFS.2006.879289
- JIA JIA ET AL: "A New Approach to Fake Finger Detection Based on Skin Elasticity Analysis", 27 août 2007 (2007-08-27), ADVANCES IN BIOMETRICS; [LECTURE NOTES IN COMPUTER SCIENCE], SPRINGER BERLIN HEIDELBERG, BERLIN, HEIDELBERG, PAGE(S) 309 - 318, XP019098906, ISBN: 978-3-540-74548-8 le document en entier
- MALTONI D ET AL: "Handbook of Fingerprint Recognition, Liveness Detection Techniques", 1 janvier 2009 (2009-01-01), HANDBOOK OF FINGERPRINT RECOGNITION, SPRINGER, LONDON, GB, PAGE(S) 386 - 391, XP002607754, ISBN: 978-1-84882-253-5 le document en entier

**Description**

La présente invention concerne un dispositif anti-fraude pour valider l'utilisation d'une vraie partie d'un corps comme support porteur d'une empreinte, ainsi qu'un procédé de validation de l'utilisation d'une vraie partie d'un corps comme support porteur d'une empreinte mis en oeuvre dans un tel dispositif anti-fraude.

Un dispositif d'identification d'un individu par son empreinte, en particulier son empreinte digitale, consiste en un capteur destiné à capturer une image de ladite empreinte, en un moyen de comparaison destiné à comparer cette image avec des images d'une base de données rassemblant les images des empreintes des personnes susceptibles d'être identifiées par le dispositif d'identification, et en un moyen de prise de décision destiné à prendre une décision quant à l'identification de l'individu à partir du résultat des comparaisons.

Certains individus mal intentionnés tentent de se faire identifier frauduleusement en utilisant des leurres afin d'induire en erreur le dispositif d'identification.

Classiquement trois types de fraudes sont identifiés:

- la fraude papier à couplage à l'eau qui consiste à reproduire l'image d'une empreinte sur un papier,
- la fraude épaisse qui consiste à reproduire une empreinte sur un bloc de silicone, et
- la fraude fine qui consiste à reproduire une empreinte sur une couche mince, par exemple du type latex, qui est ensuite collée sur un doigt.

Pour détecter une telle utilisation frauduleuse, il est connu d'utiliser la déformation du doigt sur le capteur pour vérifier si elle correspond bien à de la peau dont les caractéristiques d'élasticité sont différentes de celles des matériaux utilisés pour réaliser les leurres.

En particulier, il est connu de tourner le doigt sur le capteur afin d'induire une distorsion de l'image ce qui permet d'analyser l'élasticité de la peau ou du matériau support de la fraude.

Mais un tel procédé n'est pas très ergonomique car un tel mouvement doit être expliqué à l'individu voulant se faire identifier, ce qui n'est pas envisageable, par exemple, dans le cas d'un dispositif d'identification qui n'est pas supervisé.

Un objet de la présente invention est de proposer un dispositif anti-fraude pour valider l'utilisation d'une vraie partie d'un corps comme support porteur d'une empreinte qui ne présente pas les inconvénients de l'état de la technique, et qui, en particulier, présente une grande ergonomie pour l'individu.

A cet effet, est proposé un dispositif anti-fraude pour valider l'utilisation d'une vraie partie d'un corps comme support porteur d'une empreinte et comportant:

- une unité de contrôle,
- un capteur destiné à capturer l'image d'une empreinte portée par le support posé sur ledit capteur,
- un module de déplacement sur lequel est monté ledit capteur et qui est destiné à déplacer ledit capteur,
- un module d'analyse destiné à recevoir les données représentatives d'une image d'empreinte capturée avant le déplacement dudit capteur et d'une image d'empreinte capturée après le déplacement dudit capteur et à les analyser, et
- un module de prise de décision destiné à prendre une décision sur le fait que le support est une vraie partie d'un corps ou non, à partir des informations transmises par le module d'analyse.

Avantageusement, le module d'analyse est destiné à construire une carte de modification locale des fréquences d'arêtes de l'empreinte à partir des données représentatives des deux images d'empreintes, et une carte de déplacement local des structures de l'empreinte à partir des données représentatives des deux images d'empreintes, et à comparer la structure de chaque carte avec la structure de cartes de référence.

Avantageusement, lorsque ladite partie du corps est un doigt, le module de déplacement est prévu pour créer une translation parallèle à l'axe longitudinal du doigt lorsqu'il est posé sur le capteur.

L'invention propose également un procédé de validation permettant de valider l'utilisation d'une vraie partie d'un corps comme support porteur d'une empreinte à l'aide d'un dispositif de validation comportant un capteur destiné à capturer l'image d'une empreinte, ledit procédé de validation comportant:

- une étape initiale de capture au cours de laquelle une première image de l'empreinte est capturée par ledit capteur,
- une étape de déplacement au cours de laquelle ledit capteur est déplacé,
- une étape de capture au cours de laquelle une deuxième image de l'empreinte est capturée par ledit capteur,
- une étape d'analyse au cours de laquelle des données représentatives des deux images d'empreintes ainsi capturées sont analysées, et
- une étape de prise de décision au cours de laquelle une décision est prise quant à la validité du support en fonction des résultats de l'étape d'analyse.

Avantageusement, l'étape d'analyse consiste à construire une carte de modification locale des fréquences d'arêtes de l'empreinte à partir des données représentatives des deux images d'empreintes, et une carte de déplacement local des structures de l'empreinte à partir des données représentatives des deux images d'empreintes, et à comparer la structure de chaque carte avec la structure de cartes de référence.

Avantageusement, le procédé de validation comporte entre l'étape d'analyse et l'étape de prise de décision, une étape de test au cours de laquelle, il est vérifié si un nouveau déplacement du capteur doit être fait, et le procédé de validation comporte une étape de bouclage qui boucle de l'étape de test vers l'étape de déplacement dans le cas positif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est une représentation schématique d'un dispositif anti-fraude pour valider l'utilisation d'une vraie partie d'un corps comme support porteur d'une empreinte d'un individu selon l'invention,
la Fig. 2 est la représentation schématique de l'image d'un doigt déformé par le dispositif de détection,
la Fig. 3 est un algorithme d'un procédé de validation de l'utilisation d'une vraie partie d'un corps comme support porteur d'une empreinte d'un individu selon l'invention,
la Fig. 4 montre une demi-carte d'un flot optique correspondant à un vrai doigt, et
la Fig. 5 montre une demi-carte d'un flot optique correspondant à une fraude papier.

Dans la description qui suit, l'invention est plus particulièrement décrite dans le cas où la partie du corps est un doigt, mais elle s'applique de la même manière à toutes autres parties du corps porteur d'une empreinte.

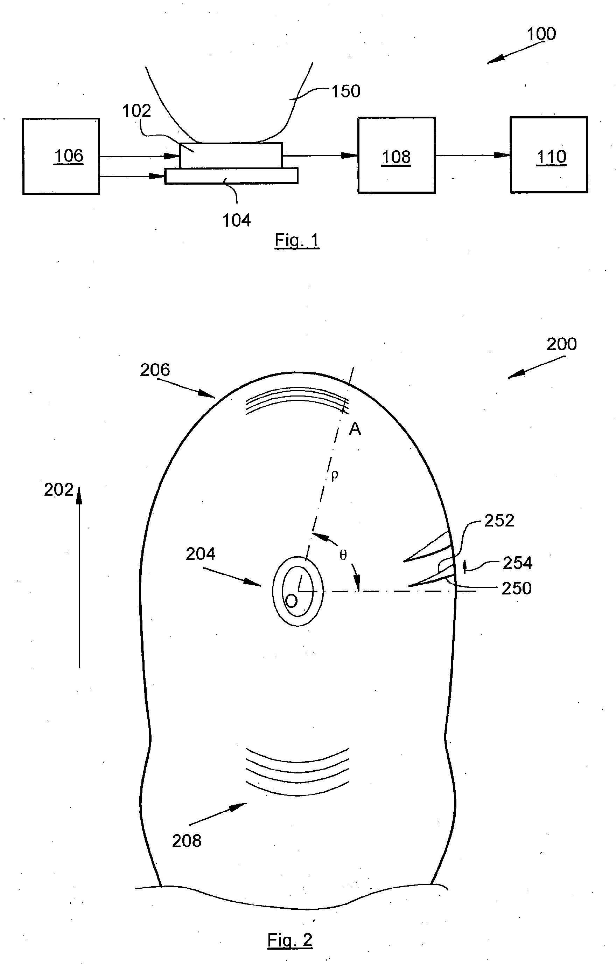

La Fig. 1 montre un dispositif anti-fraude 100 qui est destiné à valider l'utilisation d'un vrai doigt porteur d'une empreinte d'un individu.

Le dispositif anti-fraude 100 comporte:

- une unité de contrôle 106 prévue pour commander les autres éléments du dispositif anti-fraude 100,
- un capteur 102 destiné à capturer l'image d'une empreinte portée par un support 150 posé sur ledit capteur 102,
- un module d'analyse 108 destiné à recevoir des données représentatives des images d'empreintes capturées et à les analyser comme cela est décrit ci-après, et
- un module de prise de décision 110 destiné à prendre une décision sur le fait que le support 150 porteur de l'empreinte digitale est un vrai doigt ou un faux doigt, à partir des informations transmises par le module d'analyse 108 suite à son analyse.

Le dispositif anti-fraude 100 comporte également un module de déplacement 104 commandé par ladite unité de contrôle 106, sur lequel est monté ledit capteur 102 et qui est destiné à déplacer ledit capteur 102.

Le module d'analyse 108 est ainsi plus particulièrement destiné à recevoir les données représentatives d'une image d'empreinte capturée avant le déplacement du capteur 102 et d'une image d'empreinte capturée après le déplacement du capteur 102 et à les analyser.

Le principe général de l'invention consiste ainsi à capturer une image de l'empreinte du support 150, à déplacer le capteur 102 à l'aide du module de déplacement 104 ce qui entraîne une déformation du support 150 et de l'empreinte qu'il porte, puis lorsque le capteur 102 est à l'arrêt à capturer une nouvelle image.de l'empreinte ainsi déformée, à analyser les deux images ainsi capturées afin d'en déduire des données représentatives de la matière constituant ledit support 150, et à valider le support 150 selon les valeurs des données représentatives ainsi déduites.

Bien sûr, il est possible d'effectuer plusieurs déplacements successifs pour chacun desquels une capture de l'image de l'empreinte est réalisée. L'analyse portera alors sur les différentes images ainsi capturées.

Le fait que ce soit le capteur 102 qui est en mouvement, permet d'obtenir un dispositif anti-fraude 100 plus ergonomique, puisqu'il n'est plus nécessaire d'informer les individus susceptibles de se faire identifier.

Le dispositif anti-fraude 100 peut être couplé à un dispositif d'identification qui capture une image de l'empreinte du support 150 à l'aide du capteur 102 pour la comparer à des images d'une base de données.

Le capteur 102 présente une surface d'appui sur laquelle le support 150 vient en appui.

Le déplacement subi par le capteur 102 sous l'effet du module de déplacement 104 s'effectue dans un plan parallèle au plan de la surface d'appui.

Le déplacement subi par le capteur 102 peut être un déplacement simple, c'est-à-dire une translation ou une rotation, ou un déplacement complexe constitué d'une combinaison de déplacements simples.

Dans le cas d'une translation et pour des raisons d'ergonomie, la longueur de déplacement est de l'ordre millimétrique et préférentiellement inférieure à 2 mm. Le temps d'arrêt entre deux déplacements dépend de la vitesse

EP 2 771 841 B1

d'acquisition du capteur 102.

Dans le cas d'un doigt, ce dernier est positionné d'une manière préférentielle sur le capteur 102 et le module de déplacement 104 est prévu pour créer une translation parallèle à l'axe longitudinal du doigt lorsqu'il est posé sur le capteur 102. En effet, comme l'os de la phalange ne s'étend pas jusqu'à l'extrémité du doigt, les conditions mécaniques varient entre les deux extrémités du déplacement et les déformations obtenues sont plus caractéristiques d'un vrai doigt, alors que dans le cas de l'utilisation d'un leurre, ce leurre ne présente pas de telles caractéristiques mécaniques puisque qu'il est homogène.

Le module de déplacement 104 peut être tout dispositif adéquat comme par exemple un vibreur piézo-électrique.

La Fig. 2 est une représentation schématique de l'image d'une empreinte 200 du support 150 ayant subi une déformation suite à un déplacement rectiligne du capteur 102 selon un sens de déplacement 202.

Dans le mode de réalisation de l'invention proposé ici, des zones d'accroche correspondantes à un flot optique nul pour chaque image d'empreinte 200 capturée, sont définies.

Le centre de gravité des zones d'accroche ainsi définies, est déterminé et constitue un point 'O' constituant le centre de pression et servant d'origine à un système de coordonnées polaires ($\rho$, $\theta$). Ainsi un point A est caractérisé sur l'image d'empreinte 200 par un couple ($\rho$, $\theta$).

La face du support 150 qui est posée sur le capteur 102 présente des arêtes qui forment les empreintes. Ces arêtes sont réparties sur toute la face du support 150. On distingue une zone centrale où sont localisées des arêtes centrales 204, et des zones périphériques où sont localisées des arêtes périphériques qui sont ici des arêtes distales 206, et des arêtes proximales 208.

La zone centrale correspond à la zone de pression par laquelle le support 150 est en appui sur le capteur 102, c'est-à-dire autour du centre de pression 'O'. Les arêtes centrales 204 sont faiblement déformées par le déplacement du capteur 102 puisque du fait de la pression qui s'exerce sur elles, elles restent collées au capteur 102.

Dans le mode de réalisation de l'invention présenté ici, il y a deux zones périphériques, à savoir une zone amont qui se situe en amont du centre de pression O par rapport au sens de déplacement 202 du capteur 102, c'est-à-dire ici où sont les arêtes proximales 208, et une zone aval qui se situe en aval du centre de pression O par rapport au sens de déplacement 202 du capteur 102, c'est-à-dire ici où sont les arêtes distales 206.

Les arêtes distales 206 qui se situent à l'extrémité du support 150 et potentiellement à l'extrémité de l'os de la phalange dans le cas d'un vrai doigt, et les arêtes proximales 208 qui se situent à la base du support 150 sont déformées par le déplacement du capteur 102.

Dans le mode de réalisation de l'invention où la direction de déplacement du capteur 102 est orientée des arêtes proximales 208 vers les arêtes distales 206, les arêtes distales 206 se resserrent ce qui entraîne une augmentation de la fréquence des arêtes distales 206, et les arêtes proximales 208 s'écartent ce qui entraîne une diminution de la fréquence des arêtes proximales 208.

Dans le même temps, les arêtes se déplacent du fait du déplacement du capteur 102. La référence 250 indique une arête avant le déplacement du capteur 102 et la référence 252 indique la même arête après le déplacement du capteur 102.

L'analyse des données représentatives consiste à construire, à partir de ces dernières, une carte de modification locale des fréquences d'arêtes 206 et 208, et une carte de déplacement local des structures 250, 252 de l'empreinte en contact avec le capteur 102, et à comparer la structure de chaque carte avec la structure de cartes de référence stockées dans une base de données de référence.

L'analyse de la carte de modification locale des fréquences d'arêtes 204, 206 et 208 consiste à analyser entre deux images la variation des fréquences d'arêtes 204, 206 et 208 sur au moins certaines parties de l'image d'empreinte 200, et en particulier, sur la zone centrale, et d'au moins une zone périphérique par rapport au centre de pression O.

Dans le mode de réalisation de l'invention présenté ici et dans le cas d'un vrai doigt, la fréquence des arêtes centrales 204 ne varie pas du fait du déplacement du capteur 102, tandis que la fréquence des arêtes distales 206 augmente, et que la fréquence des arêtes proximales 208 diminue avec le déplacement du capteur 102.

En d'autres termes, pour un vrai doigt, la fréquence des arêtes centrales 204 autour du centre de pression O ne varie pas avec le déplacement du capteur 102, tandis que les fréquences de arêtes périphériques, ici proximales et distales, varient avec le déplacement du capteur 102, soit en diminuant, soit en augmentant.

Pour construire la carte de modification locale des fréquences d'arêtes, une pluralité de points A($\rho$, $\theta$) est observée entre au moins deux images d'empreintes 200 respectivement d'ordre i et j, et la variation de fréquences d'arêtes entre les images d'empreintes 200 i et j au point A($\rho$, $\theta$) est donnée par la formule:

$$\Delta f = \frac{freq(\rho,\theta,i) - freq(\rho,\theta,j)}{freq(\rho,\theta,i)} \qquad (1).$$

La carte de modification locale des fréquences d'arêtes peut ainsi être construite pour une multitude de points A(ρ, θ) répartis sur l'image d'empreinte 200. La répartition et l'amplitude des valeurs de Δf permettent ensuite de valider ou non le fait que le support 150 est un vrai doigt.

L'analyse de la carte de déplacement local des structures 250, 252 de l'empreinte du support 150 en contact avec le capteur 102 consiste à repérer des points caractéristiques 250, 252 de l'image de l'empreinte 200, comme par exemple des pores, des extrémités de cicatrices, des bifurcations, des fins de lignes, et à analyser le déplacement subi par chacun d'eux sous l'effet du déplacement du capteur 102. En particulier, la zone centrale n'est pas déplacée tandis que les zones périphériques le sont de manière importante.

Pour chaque point caractéristique 250, 252 ainsi repéré, un vecteur déplacement 254 peut ainsi être construit entre le point caractéristique 250 repéré avant le déplacement du capteur 102 et le point caractéristique 252 réparé après le déplacement du capteur 102.

Les cartes de déplacement local sont ainsi construites par le suivi d'une pluralité de points caractéristiques répartis sur l'image d'empreinte 200 et par une détermination du vecteur déplacement 254 de chacun d'eux, et pour ce faire, un calcul de flot optique est utilisé, éventuellement avec un filtrage local afin de limiter le nombre de points aberrants.

La répartition, la direction et l'amplitude des vecteurs déplacement 254 permettent ensuite de valider ou non le fait que le support 150 est un vrai doigt.

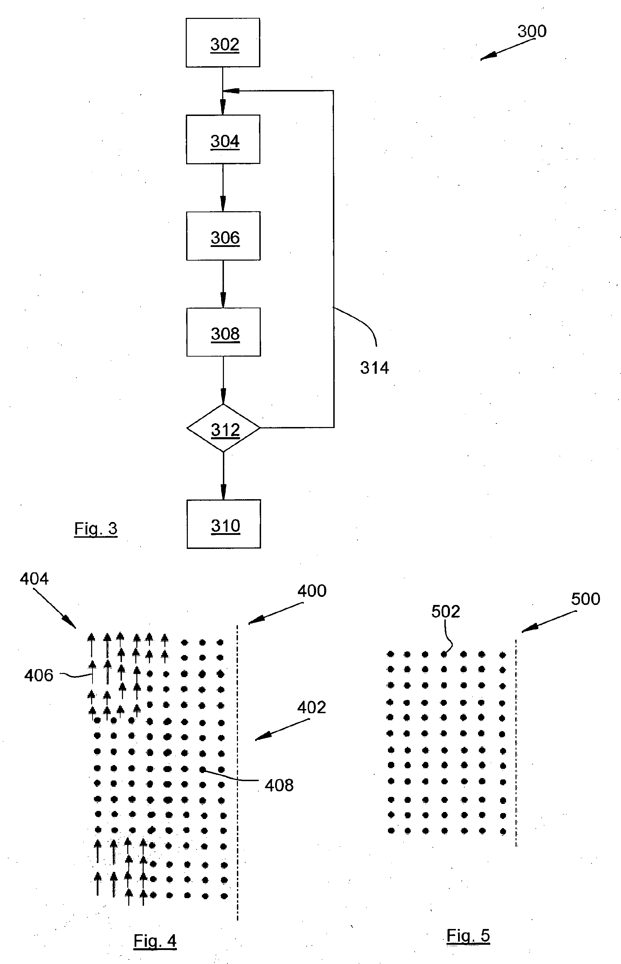

La Fig. 4 montre la demi-carte 400 du flot optique obtenue pour un vrai doigt. La zone centrale 402 en contact avec la surface d'appui du capteur 102 est très faiblement déplacée ce qui est représenté par des points 408, tandis que les zones périphériques 404 qui ne sont pas en contact avec la surface d'appui du capteur 102 présentent des déplacements plus importants représentés ici par des flèches 406.

Dans le cas d'une fraude papier, le support 150 n'est pas élastique, il n'y a donc pas de variation de fréquence des arêtes et, comme il n'y a pas de déformation du support 150, tous les points caractéristiques subissent le même déplacement. Selon que le support glisse sur la surface d'appui du capteur 102 ou ne glisse pas sur la surface d'appui du capteur 102, des résultats différents seront obtenus.

Si le support glisse, les déplacements des points caractéristiques qui sont sur le support correspondent au déplacement du capteur 102.

La carte de modification locale des fréquences d'arêtes est alors un ensemble de 'zéros' réparti sur l'image de l'empreinte 200 et la carte de déplacement local est un ensemble de vecteurs déplacement 254 qui sont tous identiques au vecteur déplacement du capteur 102.

Si le support ne glisse pas, c'est l'élément qui est derrière le support, généralement le doigt du fraudeur, qui absorbe le mouvement du capteur 102, et il n'y a donc pas de déplacement des points caractéristiques qui sont sur le support.

La Fig. 5 montre la demi-carte 500 du flot optique obtenue pour une fraude papier qui ne glisse pas. Toute l'image reste stationnaire malgré le déplacement du capteur 102, ce qui est représenté par les points 502.

Dans le cas d'une fraude épaisse, le support 150 se comporte pratiquement comme du papier sauf en périphérie de la zone de pression. Les cartes seront donc similaires à celles de la fraude papier, ou légèrement différentes en périphérie mais pas suffisamment pour qualifier que le support 150 est un vrai doigt, par exemple du fait d'une différence de souplesse entre la peau et le silicone et/ou du fait d'une différence entre la structure homogène du leurre et la structure non homogène du doigt.

Dans le cas d'une fraude fine, la zone de collage entre la couche mince et le doigt induit des résultats différents de ceux obtenus avec un vrai doigt. Ces différences sont visibles sur les cartes.

Les cartes sont centrées sur l'origine O du système de coordonnées polaires et la résolution des cartes est différente de celle des images d'empreintes 200, par exemple, une résolution de 50 dpi est choisie mais d'autres résolutions sont possibles.

Dans les cas où certains points caractéristiques ne sont pas visibles sur toutes les images d'empreintes 200, les informations nécessaires à la construction des cartes, à savoir le Δf et les vecteurs déplacement 254 correspondants sont mis à 'zéro' afin que toutes les cartes aient la même dimension. Ainsi les cartes sont vues comme des vecteurs ayant tous la même dimension.

Dans le mode de réalisation de l'invention présenté ci-dessus, les cartes sont construites plus particulièrement à l'aide de deux images d'empreintes 200 capturées successivement, mais il est possible, pour un type de carte, de regrouper l'analyse de toutes les paires d'images d'empreintes 200 capturées, dans une même carte afin d'obtenir des valeurs moyennes de Δf et des vecteurs déplacement 254.

L'analyse et la prise de décision sur le fait que le support 150 est un vrai doigt ou un faux doigt peuvent être confiées à un classifieur dont le rôle est de classer, dans une classe parmi plusieurs, un échantillon qui a des propriétés similaires à ladite classe.

L'utilisation d'un classifieur nécessite un mécanisme d'apprentissage au cours duquel une base de données de référence regroupant des exemples de cartes de vrais doigts et de fraudes réparties en classes est créée.

Le classifieur peut être du type SVM ou multi-classe SVM, ou bien du type en effectuant une analyse en composantes principales ou PCA ('principal component analysis' en Anglais) suivie d'une analyse discriminante linéaire ou LDA ('linear discriminate analysis' en Anglais).

Lorsqu'un support 150 doit être validé, une première image 200 de l'empreinte portée par le support 150 est capturée, un déplacement du capteur 102 est opéré, et une deuxième image d'empreinte 200 est capturée. Comme expliqué ci-dessus, il est possible d'effectuer d'autres déplacements du capteur 102 et de capturer une image d'empreinte après chaque déplacement.

La carte de modification locale des fréquences d'arêtes et la carte de déplacement local sont alors établies et transmises en entrée du classifieur.

Le nombre de classes varie de 2 pour 'vrai doigt' et 'fraude', à 4 pour 'vrai doigt', 'fraude papier', 'fraude épaisse' et 'fraude fine'.

Il est également possible d'agir en étapes en réalisant une première classification puis une deuxième classification.

La première classification consiste à classer les échantillons dans la classe 'fraude papier' ou une classe 'autre' à l'aide d'un premier classifieur à 2 classes. Cette première classification permet d'éliminer rapidement les fraudes papier qui sont les plus faciles à repérer.

La deuxième classification consiste à classer les échantillons de la classe 'autre' dans la classe 'vrai doigt' ou dans un classe 'fraudes' regroupant ainsi les fraudes épaisses et les fraudes fines.

La Fig. 3 représente un algorithme d'un procédé de validation 300 permettant de valider le fait que le support 150 est un vrai doigt.

Le procédé de validation 300 comprend:

- une étape initiale de capture 302 au cours de laquelle une première image d'empreinte 200 est capturée,
- une étape de déplacement 304 au cours de laquelle le capteur 102 est dép lacé,
- une étape de capture 306 au cours de laquelle une deuxième image d'empreinte 200 est capturée,
- une étape d'analyse 308 au cours de laquelle des données représentatives des deux images d'empreintes ainsi capturées sont analysées, et
- une étape de prise de décision 310 au cours de laquelle une décision est prise quant à la validité du support 150 en fonction des résultats de l'étape d'analyse.

Lorsque plusieurs déplacements du capteur 102 sont réalisés, l'étape d'analyse 308 boucle sur l'étape de déplacement 304 tant qu'un déplacement du capteur 102 doit être réalisé. A cette fin, le procédé de validation 300 comporte entre l'étape d'analyse 308 et l'étape de prise de décision 310, une étape de test 312 au cours de laquelle, une vérification de l'existence d'un nouveau déplacement du capteur 102 est faite. En cas de réponse négative, le processus se poursuit avec l'étape de prise de décision 310. En cas de réponse positive, le processus boucle sur l'étape de déplacement 304. A cette fin, le procédé de validation 300 comporte une étape de bouclage 314 qui boucle de l'étape de test 312 vers l'étape de déplacement 304. L'étape de prise de décision 310 se base alors sur les résultats des différents étapes d'analyse 308.

L'étape d'analyse 308 consiste à construire la carte de modification locale des fréquences d'arêtes, et la carte de déplacement local des structures à partir des données représentatives des images d'empreintes 200 de chaque paire d'images d'empreintes 200 capturées et à comparer la structure de chaque carte avec la structure de cartes de références stockées dans la base de données de référence par exemple à l'aide d'un classifieur.

L'étape de prise de décision 310 consiste à valider ou non la présence d'un vrai doigt selon les résultats de l'étape d'analyse 308.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cas d'un support constitué d'un doigt, mais il est possible d'appliquer l'invention dans le cas d'un support constitué de quatre doigts. Il est alors possible de construire pour chaque doigt une carte de modification locale des fréquences d'arêtes et une carte de déplacement local des structures, mais il est également possible de construire une seule carte de modification locale des fréquences d'arêtes et une seule carte de déplacement local des structures à partir de l'ensemble des données représentatives. Dans ce dernier cas, les cartes représentent les moyennes issues des données représentatives.

**Revendications**

1. Dispositif anti-fraude (100) pour valider l'utilisation d'une vraie partie d'un corps comme support (150) porteur d'une empreinte et comportant:

   - une unité de contrôle (106),

- un capteur (102) destiné à capturer l'image d'une empreinte portée par le support (150) posé sur ledit capteur (102),
- un module de déplacement (104) sur lequel est monté ledit capteur (102) et qui est destiné à déplacer ledit capteur (102),
- un module d'analyse (108) destiné à recevoir les données représentatives d'une image d'empreinte (200) capturée avant le déplacement dudit capteur (102) et d'une image d'empreinte (200) capturée après le déplacement dudit capteur (102) et à les analyser, et
- un module de prise de décision (110) destiné à prendre une décision sur le fait que le support (150) est une vraie partie d'un corps ou non, à partir des informations transmises par le module d'analyse (108).

**2.** Dispositif anti-fraude (100) selon la revendication 1, **caractérisé en ce que** le module d'analyse (108) est destiné à construire une carte de modification locale des fréquences d'arêtes (206, 208) de l'empreinte à partir des données représentatives des deux images d'empreintes (200), et une carte de déplacement local des structures (250, 252) de l'empreinte à partir des données représentatives des deux images d'empreintes (200), et à comparer la structure de chaque carte avec la structure de cartes de référence.

**3.** Dispositif anti-fraude (100) selon l'une des revendications 1 ou 2, **caractérisé en ce que**, lorsque ladite partie du corps est un doigt, le module de déplacement (104) est prévu pour créer une translation parallèle à l'axe longitudinal du doigt lorsqu'il est posé sur le capteur (102).

**4.** Procédé de validation (300) permettant de valider l'utilisation d'une vraie partie d'un corps comme support (150) porteur d'une empreinte à l'aide d'un dispositif de validation (100) comportant un capteur (102) destiné à capturer l'image d'une empreinte, ledit procédé de validation (300) comportant:

- une étape initiale de capture (302) au cours de laquelle une première image de l'empreinte (200) est capturée par ledit capteur (102),
- une étape de déplacement (304) au cours de laquelle ledit capteur (102) est déplacé,
- une étape de capture (306) au cours de laquelle une deuxième image de l'empreinte (200) est capturée par ledit capteur (102),
- une étape d'analyse (308) au cours de laquelle des données représentatives des deux images d'empreintes (200) ainsi capturées sont analysées, et
- une étape de prise de décision (310) au cours de laquelle une décision est prise quant à la validité du support (150) en fonction des résultats de l'étape d'analyse.

**5.** Procédé de validation (300) selon la revendication 4, **caractérisé en ce que** l'étape d'analyse consiste à construire une carte de modification locale des fréquences d'arêtes (206, 208) de l'empreinte à partir des données représentatives des deux images d'empreintes (200), et une carte de déplacement local des structures (250, 252) de l'empreinte à partir des données représentatives des deux images d'empreintes (200), et à comparer la structure de chaque carte avec la structure de cartes de référence.

**6.** Procédé de validation (300) selon l'une des revendications 4 ou 5, **caractérisé en ce qu'**il comporte entre l'étape d'analyse (308) et l'étape de prise de décision (310), une étape de test (312) au cours de laquelle, il est vérifié si un nouveau déplacement du capteur (102) doit être fait, et **en ce qu'**il comporte une étape de bouclage (314) qui boucle de l'étape de test (312) vers l'étape de déplacement (304) dans le cas positif.


**Patentansprüche**

**1.** Antibetrugsvorrichtung (100), die dazu bestimmt ist, die Verwendung eines echten Körperteils als Abdruckträgersubstrat (150) zu validieren und die folgendes umfasst :

- eine Steuereinheit (106),
- einen Sensor (102), der dazu bestimmt ist, das Bild eines, vom, auf den genannten Sensor (102) aufgelegten Substrat (150) getragenen Abdrucks zu erfassen,
- ein Bewegungsmodul (104), auf das der genannte Sensor (102) montiert ist und das dazu bestimmt ist, den genannten Sensor (104) zu bewegen,
- ein Analysemodul (108), das dazu bestimmt ist, die räpresentativen Daten eines, vor der Bewegung des genannten Sensors (102) erfassten Abdruckbilds (200) und eines, nach der Bewegung des genannten Sensors (102) erfassten Abdruckbilds (200) zu empfangen und zu analysieren, und
- ein Entscheidungsmodul (110), das dazu bestimmt ist, ausgehend von den, vom Analysemodul (108) übertragenen Informationen eine Entscheidung darüber zu treffen, ob das Substrat (150) ein echtes Körperteil ist oder nicht.

2. Antibetrugsvorrichtung (100) gemäß Patentanspruch 1, **dadurch gekennzeichnet, dass** das Analysemodul (108) dazu bestimmt ist, ausgehend von den räpresentativen Daten der beiden Abdruckbilder (200) eine Karte der lokalen Änderung der Kantenfrequenzen (206, 208) des Abdrucks, und ausgehend von den räpresentativen Daten der beiden Abdruckbilder (200) eine Karte der lokalen Bewegung der Strukturen (250,252) des Abdrucks zu erzeugen und die Struktur jeder Karte mit der Struktur von Referenzkarten zu vergleichen.

3. Antibetrugsvorrichtung (100) gemäß Patentanspruch 1 ou 2, **dadurch gekennzeichnet, dass** wenn der genannte Körperteil ein Finger ist, das Bewegungsmodul (104) vorgesehen ist, um eine Verschiebung parallel zur Längsachse des Fingers zu erzeugen, wenn dieser auf den Sensor (102) aufgelegt ist.

4. Validierungsverfahren (300), das die Validierung der Benutzung eines echten Körperteils als Abdruckträgersubstrat (100) ermöglicht, und zwar mit Hilfe einer Validierungsvorrichtung (100), die einen Sensor (102) umfasst, der dazu bestimmt ist, das Bild eines Abdrucks zu erfassen, wobei das genannte Validierungsverfahren (300) folgendes umfasst:

   - einen anfänglichen Erfassungsschritt (302), bei dem ein erstes Bild des Abdrucks (200) vom genannten Sensor (102) erfasst wird,
   - einen Bewegungsschritt (304), bei dem der genannte Sensor (102) bewegt wird,
   - einen Erfassungsschritt (306) bei dem ein zweites Bild des Abdrucks (200) vom genannten Sensor (102) erfasst wird,
   - einen Analyseschritt (308), bei dem die räpresentativen Daten der beiden, auf diese Weise erfassten Abdruckbilder (200) analysiert werden, und
   - einen Entscheidungsschritt (310) bei dem eine Entscheidung betreffend die Gültigkeit des Substrats (150) in Abhängigkeit der Ergebnisse des Analyseschritts getroffen wird.

5. Validierungsverfahren (300) gemäß Patentanspruch 4, dadurch gekennzeicnet, dass der Analyseschritt darin besteht, eine Karte der lokalen Änderung der Kantenfrequenzen (206, 208) des Abdrucks ausgehend von den räpresentativen Daten der beiden Abdruckbilder (200), und eine Karte der lokalen Bewegung der Strukturen (250, 252) des Abdrucks ausgehend von den räpresentativen Daten der beiden Abdruckbilder (200) zu erzeugen und die Struktur jeder Karte mit der Struktur von Referenzkarten zu vergleichen.

6. Validierungsverfahren (300) gemäß einem der Patentansprüche 4 oder 5, **dadurch gekennzeichnet, dass** es zwischen dem Analyseschritt (308) und dem Entscheidungsschritt (310) einen Testschritt (312) umfasst, bei dem geprüft wird, ob eine erneute Bewegung des Sensors (102) vorzunehmen ist, sowie einen Rückkopplungsschritt (314), der im positiven Fall den Testschritt zum Bewegungsschritt (304) rückkoppelt.

**Claims**

1. Antifraud device (100) for validating the use of a real part of a body as an imprint-bearing substrate (150) and comprising:

   - a control unit (106),
   - a sensor (102) intended to capture the image of an imprint carried by the substrate (150) placed on said sensor (102),
   - a movement module (104) on which said sensor (102) is mounted and which is intended to move said sensor (102),
   - an analysis module (108) intended to receive the data representing an image of an imprint (200) captured before the movement of said sensor (102) and an image of an imprint (200) captured after the movement of said sensor (102) and to analyse them, and
   - a decision-making module (110) intended to make a decision as to whether or not the substrate (150) is a real part of a body, from information transmitted by the analysis module (108).

2. Antifraud device (100) according to claim 1, **characterised in that** the analysis module (108) in intended to construct a map for the local modification of the ridges (206, 208) frequencies of the imprint from data representing the two images of imprints (200), and a map of local movement of the structures (250, 252) of the imprint from the data representing the two imprint images (200), and to compare the structure of each map with the structure of reference maps.

3. Antifraud device (100) according to one of claims 1 or 2, **characterised in that**, when said part of the body is a finger, the movement module (104) is designed to create a translation parallel to the longitudinal axis of the finger when it is placed on the sensor (102).

4. Validation method (300) for validating the use of a real part of a body as a substrate (150) carrying an imprint by means of a validation device (100) comprising a sensor (102) intended to capture the image of an imprint, said validation method (300) comprising:

   - an initial capture step (302) during which a first image of the imprint (200) is captured by said sensor (102),
   - a movement step (304) during which said sensor (102) is moved,
   - a capture step (306) during which a second image of the imprint (200) is captured by said sensor (102),
   - an analysis step (308) during which data representing the two imprint images (200) thus captured are analysed, and
   - a decision-making step (310) during which a decision is made as to the validity of the substrate (150) according to the results of the analysis step.

5. Validation method (300) according to claim 4, **characterised in that** the analysis step consists of constructing a map of local modification of the ridges (206, 208) frequencies of the imprint from data representing two imprint images (200), and a map of local movement of the structures (250, 252) of the imprint from the data representing the two imprint images (200), and comparing the structure of each map with the structure of reference maps.

6. Validation method (300) according to one of claims 4 or 5, **characterised in that** it comprises, between the analysis step (308) and the decision-making step (310), a test step (312) during which it is checked whether a new movement of the sensor (102) must be made, and **in that** it comprises a looping step (314) that loops the test step (312) to the movement step (304) in the positive case.

100

150

102

106

108

110

104

Fig. 1

200

206

A

ρ

202

θ

252

204

254

250

208

Fig. 2

302

300

304

306

308

314

312

Fig. 3

310

404

400

406

402

408

Fig. 4

502

500

Fig. 5